# EUROPEAN PATENT SPECIFICATION

(11) **EP 2 003 285 B1**
(45) Date of publication and mention of the grant of the patent: **23.03.2011**
(21) Application number: 08154996.6
(22) Date of filing: 23.04.2008
(51) Int. Cl.: E21B 19/00, E21B 33/035, E21B 43/01

(54) **Umbilical deployment system**
System zum Entfalten von Versorgungskabeln
Système de déploiement d'un câble ombilical

(30) Priority: 15.06.2007 GB 0711569
(43) Date of publication of application: 17.12.2008
(73) Proprietor: Vetco Gray Controls Limited, Bristol BS48 1BS (GB)
(72) Inventor: Dursley, Paul, Backwell, Bristol BS48 3GY (GB)
(74) Representative: Newstead, Michael John

(56) References cited:
- EP-A- 0 387 076
- WO-A-2005/010316
- GB-A- 2 425 565
- GB-A- 2 440 337
- US-A- 4 682 913
- US-A- 6 102 124

## Description

This invention relates to a method for providing a back-up umbilical for a well installation, and a back-up umbilical deployment system for a well installation located at the bed of a body of water. The well installation may for example be a subsea hydrocarbon extraction well, although such installations may equally be located in bodies of water such as lakes.

Control, monitoring and powering of a subsea hydrocarbon fluid production well for example is effected from a surface or land-based platform via an umbilical cable which carries the necessary electric / hydraulic power lines and electrical / optical communication lines. This umbilical is connected at its lower end to, typically, a subsea control and distribution unit (CDU), with the control signals / power being distributed to the various trees at the well heads on the sea bed as required. In the event of a failure of the umbilical a Back-Up Intervention Control (BUIC) system may be employed to replace the services normally provided by the umbilical in order to continue fluid production from the well until the umbilical is repaired. A BUIC system is effectively an insurance policy against failure of the prime controls umbilical, and is typically purchased where the prime umbilical is considered sufficiently vulnerable. A BUIC system is designed to be deployed only when a failure in the prime umbilical occurs, and a vessel is used for this deployment. Since the cost of maintaining a vessel to provide this service is prohibitive, most well operators opt for a BUIC system that employs a "vessel of opportunity" with limited facilities. While there is generally assistance from a Remotely Operated Vehicle (ROV) to enable disconnection of the umbilical and connection of the back-up umbilical at the CDU, there is generally no lift assistance available.

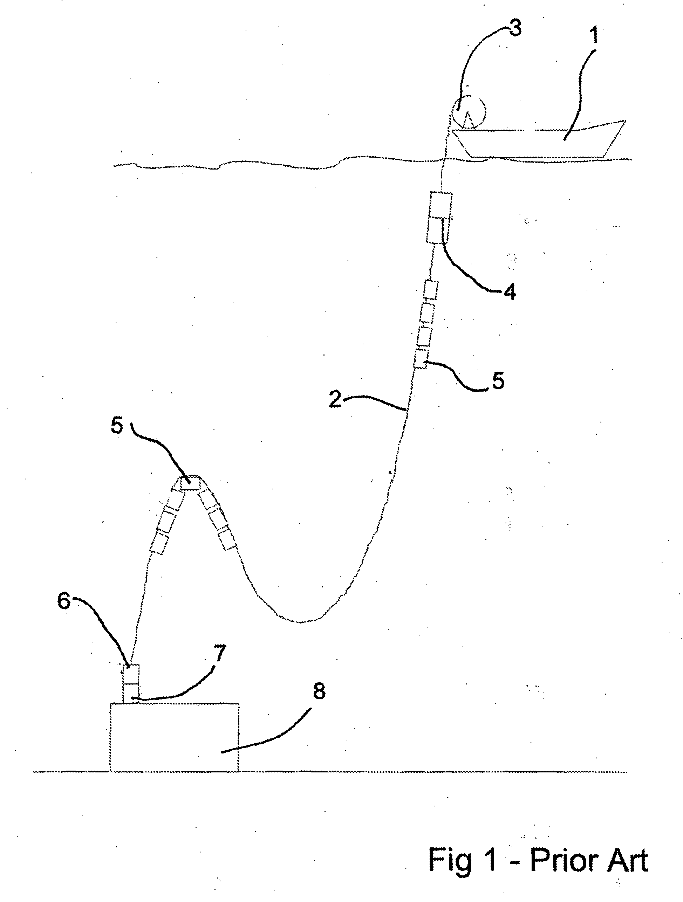

A typical deployment of a BUIC system is shown in Fig. 1. A vessel 1, for example a vessel of opportunity, carries a replacement dynamic umbilical 2 stowed on a reel / winch assembly 3. The assembly 3 is integrated with a handling / overboarding mechanism used to deploy the umbilical 2. Integrated into this system is an Emergency Quick Disconnect Package (EQDP) 4 which permits simple disconnection of the umbilical 2.

Furthermore, the umbilical 2 may include buoyancy devices 5 to support the umbilical within the water. The umbilical 2, and umbilical-mounted half of the EQDP 4, are typically stowed on the reel 3 for handling through the handling / overboarding mechanism. The buoyancy devices 5 may also be stowed on the reel 3 if the operator requests this facility, alternatively they may be attached to the umbilical on installation. The lower end of the umbilical is connected to a subsea umbilical termination (SUT) 6. This provides connection with a CDU 8 via CDU receptacle 7.

To deploy the umbilical 2, it is unwound from the reel 3, through the handling / overboard mechanism and over the side of the vessel 1. The umbilical 2 is required to support its own weight, plus that of the SUT 6, through the water column under the prevailing weather, sea and current conditions. For connection with the well installation, the umbilical 2 and its termination 6 must be presented directly above and correctly oriented to the receptacle 7. This is often possible in light weather and sea conditions, but is unlikely to be successful in any other sea state, and is a difficult and thus expensive exercise. The vessel of opportunity is unlikely to be as stable a platform as a larger installation vessel, and will therefore have greater pitch, heave and roll motions for any given set of weather or sea conditions. Such a vessel does not generally have a moonpool facility, which means that overboarding of the umbilical, in the worst case scenario, has to be over the stem of the vessel. This is probably the worst location at which to overboard a dynamic umbilical when trying to position the SUT at installation.

US-A-6 102 124 discloses a system in which, for workover, a hydraulic umbilical remains connected to a control pod at a well tree and an electrical umbilical from a workover vessel is connected to the control pod..

It is an aim of the present invention to provide a method and system for deploying a back-up umbilical so as to enable a "predeployed" umbilical, which may be installed at the same time as the main production umbilical and is retained within the body of water during the normal operation of the well, so that its operative connection may be effected quickly and easily, without depending on accurate vessel positioning. Potentially, a smaller vessel may also be used to effect connection.

With such a system, instead of requiring full installation of the umbilical, one end of the umbilical is recovered and lifted up to a connection system on the vessel.

A system and method in accordance with the present invention confers many advantages, for example:
- no lift assistance is necessary;
- very accurate vessel manoeuvring is not required;
- manpower requirements are reduced;
- weather and sea state conditions are of less influence, this leads in turn to a potentially wider weather / sea state intervention window;
- the mechanical systems within the BUIC system are simplified, as there is no requirement for umbilical stowage on a reel or an overboarding / handling mechanism and only a winch is required;
- reduced mechanical risk to the umbilical and SUT during an intervention;
- the EQDP does not have to be stowed on a reel or handled through an overboarding / handling mechanism;
- reduced size and weight of ship-borne BUICS equipment;
- no buoyancy handling or attachment issues on the vessel. Buoyancy does not have to withstand stowage crushing forces on a reel or winch;
- reduced crane lift capability at mobilisation and demobilisation;
- reduced onshore storage provision as neither an umbilical nor storage reel need be kept onshore;
- greater potential to automate or semi-automate ship-borne mechanical BUICS functions; and
- quicker mobilisation of dockside-stored BUICS equipment.

The present invention is defined by the accompanying claims.

The invention will now be described, by way of example, with reference to the accompanying drawings, in which:-
Fig. 1 shows a conventional umbilical deployment technique;
Fig. 2 shows a first embodiment of a pre-deployed umbilical system in accordance with the present invention;
Fig. 3 shows a second embodiment of a system in accordance with the present invention; and
Fig. 4 shows a third embodiment of a system in accordance with the present invention.

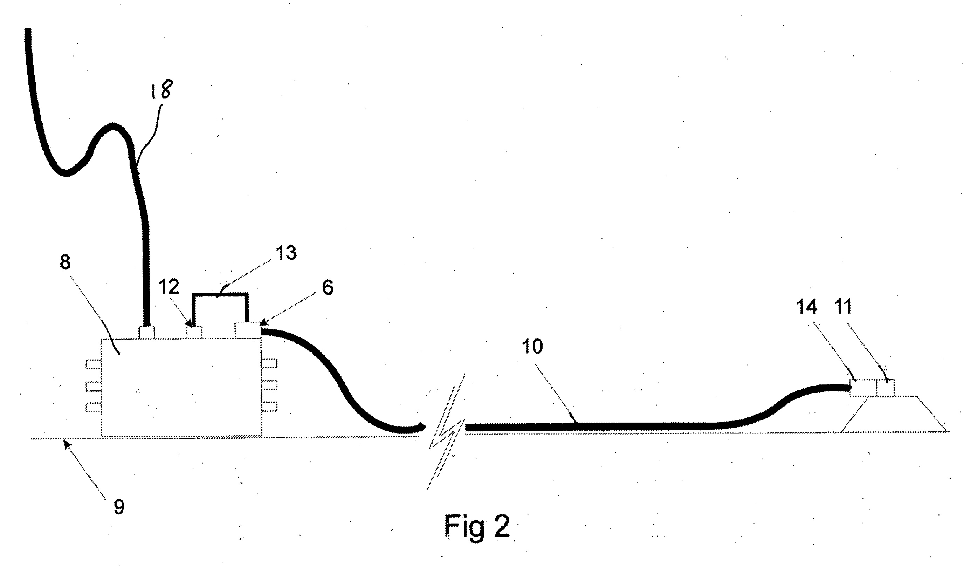

A system in accordance with the present invention may be installed in a number of ways, depending on the results of a dynamic analysis of the umbilical and the recommendations as to its installed configuration, for example "Lazy Wave", "Steep Wave" or simple catenary. Various installation possibilities are shown in Figs. 2 to 4.

A comparatively simple system to install is shown in Fig. 2, where a simple catenary is shown to be a viable solution. A back-up umbilical 10 is laid out on the seabed 9, which may be carried out at the same time as installation of main umbilical 18, so as to be retained in a static position. One end of the umbilical 10 finishes in a recoverable SUT 6, which is connected to CDU 8. The CDU 8 has BUIC ports 12 for hydraulic and / or electrical power and electrical and / or optical communications as required, the ports 12 being linked by jumpers 13 to the SUT 6. The other end of the umbilical 10 finishes in a connector 14, which forms half of an EQDP. Connector 14 is releasably connected to a parking unit 11. Parking unit 11 lies on the seabed due to the combined weight of the parking unit 11 and umbilical 10, resting on or in a predeployed storage base (not shown) and acts to protect the end of umbilical 10.

To effect operative deployment of the umbilical 10, an ROV (not shown) takes a lift line from a winch on a surface vessel or platform and attaches it to the connector 14 or parking unit 11. The winch then lifts the connector 14 end of the umbilical 10, together with the parking unit 11, up to the surface platform / vessel, where the umbilical 10 is connected to the BUIC system housed thereon.

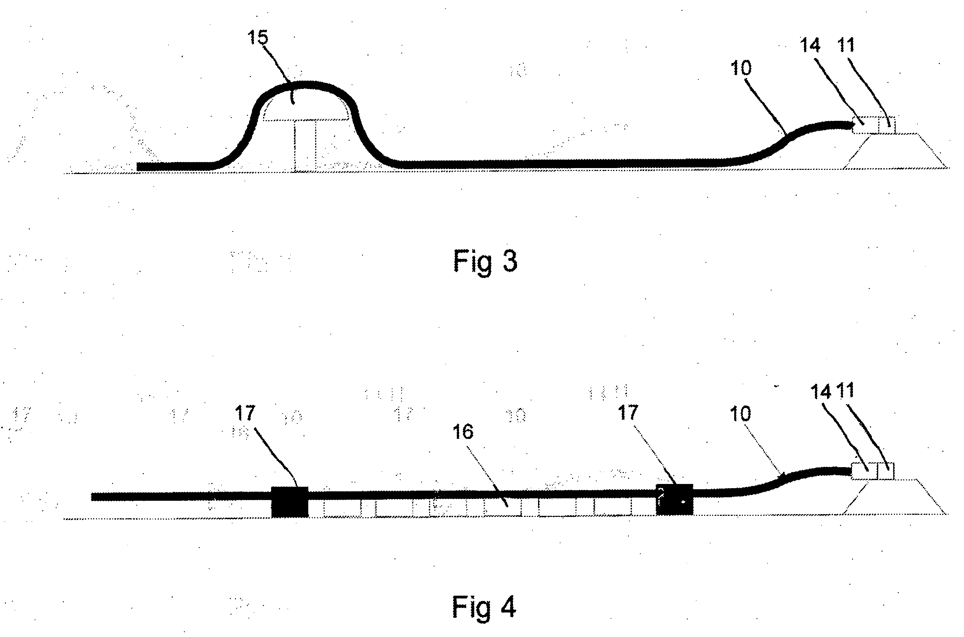

Fig. 3 shows part of an alternative arrangement, used for example where it is determined that a "Lazy Wave" configuration is required. In this embodiment, deflection means 15 on the seaked 9, in this case a buoyant arch, is used to support a portion of the umbilical 10, to arrange it in a non-linear fashion and thus introduce slack into the umbilical, which decouples vessel motions (and therefore loads) from the SUT interface to the CDU.

Fig. 4 shows part of an alternative arrangement, in which the umbilical 10 is provided with buoyancy modules 16 positioned as required along its length. These act to reduce the load weight on the EQDP under both static and dynamic heave conditions. The buoyancy modules 16 are held to the seabed by tethering to clump weights 17. Weights 17 are detachable from the umbilical 10 by an ROV.

The above-described embodiments are exemplary only, and various possibilities are possible within the scope of the claims.

The buoyancy means shown in Fig. 4 may be used in conjunction with the deflection means of Fig. 3.

Confidence in the health of the umbilical can be achieved by incorporating a cross connection system in the parking unit, allowing electrical power and fibre-optic communications to be looped between the multiple paths normally incorporated in the umbilical for monitoring purposes.

## Claims

1. A method for providing a back-up umbilical connection for a well installation, the well installation being located at the bed (9) of a body of water, comprising the steps of:
a) providing a back-up umbilical (10) having first and second ends with the first end being connected to a control and distribution unit (8) of the installation, a main umbilical (18) also being connected to the control and distribution unit;
b) prior to operative deployment of the back-up umbilical, locating the back-up umbilical such that at least a portion of the back-up umbilical is statically retained within the body of water;
c) providing a parking unit (11) on the bed of the body of water; and
d) connecting the second end of the back-up umbilical to the parking unit.

2. A method according to claim 1, wherein in step b), the portion of the back-up umbilical is retained proximate the bed (9) of the body of water.

3. A method according to claim 1 or 2, comprising the step of:
e) lifting the second end of the back-up umbilical (10) to a platform at the surface of the body of water.

4. A method according to claim 3, wherein step e) is carried out using a remotely operated vehicle.

5. A method according to any preceding claim, wherein the back-up umbilical (10) is provided with buoyancy means (16).

6. A method according to any preceding claim, comprising the step of providing deflection means (15) to cause the back-up umbilical (10) to be non-linearly arranged during retention.

7. A method according to any preceding claim, comprising the step of monitoring the health of the back-up umbilical (10) during detention.

8. A method according to claim 7, wherein monitoring is carried out by passing signals through the back-up umbilical (10) via the parking unit (11).

9. An umbilical deployment system for a well installation located at the bed (9) of a body of water, comprising a back-up umbilical (10) having first and second ends with the first end being connected to a control and distribution unit (8) of the installation, a main umbilical (18) also being connected to the control and distribution unit, wherein, prior to operative deployment of the back-up umbilical, at least a portion of the back-up umbilical is statically retained within the body of water, the system further comprising a parking unit (11) and the second end of the back-up umbilical (10) being connected to the parking unit prior to operative deployment

10. A system according to claim 9, wherein prior to operative deployment, the portion of the back-up umbilical (10) is retained proximate the bed (9) of the body of water.

11. A system according to claim 9 or 10, wherein the second end of the back-up umbilical (10) is releasably connected to the parking unit (11).

12. A system according to any of claims 9 to 11, comprising deflection means (15) to retain the back-up umbilical (10) in a non-linear configuration prior to deployment.

13. A system according to claim 12, wherein the deflection means (15) is on the bed (9) of the body of water.

14. A system according to claim 12 or 13, wherein the deflection means (15) comprises a support for raising a portion of the back-up umbilical (10).

15. A system according to any of claims 9 to 14, wherein the back-up umbilical (10) is provided with buoyancy means (16).

16. A system according to any of claims 9 to 15, comprising means for monitoring the health of the back-up umbilical (10) prior to deployment.

17. A system according to claim 16, wherein the monitoring means comprises means for passing signals through the back-up umbilical (10) via the parking unit (11).

## Patentansprüche

1. Verfahren zum Bereitstellen einer Reserve-Versorgungsverbindung für eine Bohrlochanlage, wobei sich die Bohrlochanlage am Grund (9) eines Gewässers befindet, das folgende Schritte umfasst:
a) Bereitstellen einer Reserve-Versorgungsleitung (10) mit einem ersten und einem zweiten Ende, wobei das erste Ende mit einer Steuerungs- und Verteilungseinheit (8) der Anlage verbunden ist, wobei eine Haupt-Versorgungsleitung (18) ebenfalls mit der Steuerungs- und Verteilungseinheit verbunden ist;
b) Platzieren der Reserve-Versorgungsleitung, vor dem wirksamen Einsetzen der Reserve-Versorgungsleitung, so dass mindestens ein Abschnitt der Reserve-Versorgungsleitung statisch im Gewässer gehalten wird;
c) Bereitstellen einer Parkeinheit (11) am Grund des Gewässers; und
d) Verbinden des zweiten Endes der Reserve-Versorgungsleitung mit der Parkeinheit.

2. Verfahren nach Anspruch 1, wobei in Schritt b) der Abschnitt der Reserve-Versorgungsleitung nah am Grund (9) des Gewässers gehalten wird.

3. Verfahren nach Anspruch 1 oder 2, das folgenden Schritt umfasst:
e) Heben des zweiten Endes der Reserve-Versorgungsleitung (10) auf eine Plattform an der Oberfläche des Gewässers.

4. Verfahren nach Anspruch 3, wobei Schritt e) unter Verwendung eines ferngesteuerten Fahrzeugs ausgeführt wird.

5. Verfahren nach einem der vorangehenden Ansprüche, wobei die Reserve-Versorgungsleitung (10) mit Auftriebsmitteln (16) ausgestattet ist.

6. Verfahren nach einem der vorangehenden Ansprüche, umfassend den Schritt des Bereitstellens von Umlenkungsmitteln (15), um die Reserve-Versorgungsleitung (10) zu veranlassen, während des Haltens nichtlinear angeordnet zu sein.

7. Verfahren nach einem der vorangehenden Ansprüche, umfassend den Schritt des Überwachens der Intaktheit der Reserve-Versorgungsleitung (10) während des Haltens.

8. Verfahren nach Anspruch 7, wobei die Überwachung ausgeführt wird, indem Signale über die Parkeinheit (11) durch die Reserve-Versorgungsleitung (10) geleitet werden.

9. Versorgungsleitungs-Einsatzsystem für eine Bohrlochanlage, die sich am Grund (9) eines Gewässers befindet, umfassend eine Reserve-Versorgungsleitung (10) mit einem ersten und einem zweiten Ende, wobei das erste Ende mit einer Steuerungs- und Verteilungseinheit (8) der Anlage verbunden ist, wobei eine Haupt-Versorgungsleitung (18) ebenfalls mit der Steuerungs- und Verteilungseinheit verbunden ist, wobei vor dem wirksamen Einsetzen der Reserve-Versorgungsleitung mindestens ein Abschnitt der Reserve-Versorgungsleitung statisch im Gewässer gehalten wird, wobei das System weiter eine Parkeinheit (11) umfasst und das zweite Ende der Reserve-Versorgungsleitung (10) vor dem wirksamen Einsetzen mit der Parkeinheit verbunden wird.

10. System nach Anspruch 9, wobei vor dem wirksamen Einsetzen der Abschnitt der Reserve-Versorgungsleitung (10) nah am Grund (9) des Gewässers gehalten wird.

11. System nach Anspruch 9 oder 10, wobei das zweite Ende der Reserve-Versorgungsleitung (10) lösbar mit der Parkeinheit (11) verbunden ist.

12. System nach einem der Ansprüche 9 bis 11, umfassend Umlenkmittel (15) zum Halten der Reserve-Versorgungsleitung (10) in einer nichtlinearen Anordnung vor dem Einsetzen.

13. System nach Anspruch 12, wobei sich das Umlenkmittel (15) am Grund (9) des Gewässers befindet.

14. System nach Anspruch 12 oder 13, wobei das Umlenkmittel (15) eine Auflage zum Anheben eines Abschnitts der Reserve-Versorgungsleitung (10) umfasst.

15. System nach einem der Ansprüche 9 bis 14, wobei die Reserve-Versorgungsleitung (10) mit Auftriebsmitteln (16) ausgestattet ist.

16. System nach einem der Ansprüche 9 bis 15, umfassend Mittel zum Überwachen der Intaktheit der Reserve-Versorgungsleitung (10) vor dem Einsetzen.

17. System nach Anspruch 16, wobei das Überwachungsmittel Mittel zum Leiten von Signalen durch die Reserve-Versorgungsleitung (10) über die Parkeinheit (11) umfasst.

## Revendications

1. Procédé de fourniture d'une connexion ombilicale de secours pour une installation de puits, l'installation de puits se trouvant au niveau du lit (9) d'une masse d'eau, comprenant les étapes suivantes :
a) fourniture d'un câble ombilical de secours (10) ayant des première et seconde extrémités, la première extrémité étant raccordée une unité de commande et de distribution (8) de l'installation, un câble ombilical principal (18) étant aussi raccordé à l'unité de commande et de distribution ;
b) avant le déploiement opérationnel du câble ombilical de secours, positionnement du câble ombilical de secours de telle sorte qu'au moins une partie du câble ombilical de secours soit retenue statiquement dans la masse d'eau ;
c) fourniture d'une unité de parcage (11) sur le lit de la masse d'eau ; et
d) raccordement de la seconde extrémité du câble ombilical de secours à l'unité de parcage.

2. Procédé selon la revendication 1, dans lequel à l'étape b), la partie du câble ombilical de secours est retenue près du lit (9) de la masse d'eau.

3. Procédé selon la revendication 1 ou 2, comprenant l'étape de :
e) levage de la seconde extrémité du câble ombilical de secours (10) jusqu'à une plate-forme située à la surface de la masse d'eau.

4. Procédé selon la revendication 3, dans lequel l'étape e) est effectuée au moyen d'un véhicule télécommandé.

5. Procédé selon l'une quelconque des revendications précédentes, dans lequel le câble ombilical de secours (10) est muni d'un moyen de flottaison (16).

6. Procédé selon l'une quelconque des revendications précédentes, comprenant l'étape de fourniture d'un moyen de déviation (15) pour faire en sorte que le câble ombilical de secours (10) ne soit pas disposé linéairement durant sa retenue.

7. Procédé selon l'une quelconque des revendications précédentes, comprenant l'étape de contrôle de l'état du câble ombilical de secours (10) durant sa retenue.

8. Procédé selon la revendication 7, dans lequel le contrôle est effectué en passant des signaux à travers le câble ombilical de secours (10) par l'intermédiaire de l'unité de parcage (11).

9. Système de déploiement d'un câble ombilical pour une installation de puits se trouvant au niveau du lit (9) d'une masse d'eau, comprenant un câble ombilical de secours (10) ayant des première et seconde extrémités, la première extrémité étant raccordée à une unité de commande et de distribution (8) de l'installation, un câble ombilical principal (18) étant aussi raccordé à l'unité de commande et de distribution, dans lequel, avant le déploiement opérationnel du câble ombilical de secours, au moins une partie du câble ombilical de secours est retenue statiquement dans la masse d'eau, le système comprenant en outre une unité de parcage (11) et la seconde extrémité du câble ombilical de secours (10) étant raccordée à l'unité de parcage avant le déploiement opérationnel.

10. Système selon la revendication 9, dans lequel avant le déploiement opérationnel, la partie du câble ombilical de secours (10) est retenue près du lit (9) de la masse d'eau.

11. Système selon la revendication 9 ou 10, dans lequel la seconde extrémité du câble ombilical de secours (10) est raccordée de façon détachable à l'unité de parcage (11).

12. Système selon l'une quelconque des revendications 9 à 11, comprenant un moyen de déviation (15) pour retenir le câble ombilical de secours (10) dans une configuration non linéaire avant son déploiement.

13. Système selon la revendication 12, dans lequel le moyen de déviation (15) est situé sur le lit (9) de la masse d'eau.

14. Système selon la revendication 12 ou 13, dans lequel le moyen de déviation (15) comprend un support pour lever une partie du câble ombilical de secours (10).

15. Système selon l'une quelconque des revendications 9 à 14, dans lequel le câble ombilical de secours (10) est muni d'un moyen de flottaison (16).

16. Système selon l'une quelconque des revendications 9 à 15, comprenant un moyen de contrôle de l'état du câble ombilical de secours (10) avant son déploiement.

17. Système selon la revendication 16, dans lequel le moyen de contrôle comprend un moyen pour passer des signaux à travers le câble ombilical de secours (10) par l'intermédiaire de l'unité de parcage (11).
